# EUROPEAN PATENT SPECIFICATION

(11) **EP 2 390 528 B1**
(45) Date of publication and mention of the grant of the patent: **16.05.2018**
(21) Application number: 11167320.8
(22) Date of filing: 24.05.2011
(51) Int. Cl.: F16F 9/32, F16F 9/06, B62D 55/112, B60G 3/14

(54) **Suspension system**
Aufhängungssystem
Système de suspension

(30) Priority: 25.05.2010 GB 201008706
(43) Date of publication of application: 30.11.2011
(73) Proprietor: Horstman Defence Systems Limited, Bath Somerset BA1 3EX (GB)
(72) Inventor: Holman, Tim, Nailsea, BS48 4NZ (GB); D'Aubyn, Robert, Bath, Somerset BA1 3PF (GB)
(74) Representative: Haseltine Lake LLP

(56) References cited:
- DE-A1- 4 226 010
- FR-A1- 2 609 130
- GB-A- 1 508 527

## Description

This invention relates to a suspension system, and is particularly, although not exclusively, concerned with a suspension system for a tracked vehicle.

A tracked vehicle has a track which extends about a series of guide wheels. Typically, the guide wheels are mounted to the body of the vehicle by suspension units, for example hydro-pneumatic suspension units.

Hydro-pneumatic suspension units for vehicles are known, for example EP1900963 discloses a suspension unit comprising a hydraulic damper and pneumatic springs. Leakage of either the hydraulic or pneumatic fluid from the suspension unit is detrimental to the performance of the suspension unit, and in extreme circumstances causes the suspension unit to collapse under load. Failure is detectable when the suspension unit is mounted on a four-wheeled vehicle, for example, since collapse of a suspension unit causes the vehicle to cant towards the collapsed unit. However, in the case of tracked vehicles in which the weight of the vehicle is borne by a large number of wheels on either side of the vehicle, failure of a single suspension unit can remain undetected since the remaining suspension units are capable of supporting the weight of the vehicle without a noticeable change in inclination or ride height of the vehicle.

It is therefore desirable to provide an alternative means for detecting failure of a suspension unit.

GB 1 508 527 discloses electrically testing shock absorbers based on a force/velocity characteristic of a suspension unit comprising a piston in a cylinder. A piezo-electric transducer is used to measure the pressure in liquid displaced from a lower chamber into an upper chamber, and a velocity transducer is provided on the piston head. The voltage signals from the sensors are compared and produce a colour change in an electro-chemical indicator when the piston velocity is between preset values and the pressure is greater than a threshold.

DE 4 22 60 10 discloses a vehicle lifetime monitoring system in which transducer measurement values are fed to an evaluation unit throughout vehicle travel and are stored. The summed measurement values are evaluated to determine the maximum load capability of the vehicle. Strain gauges can be used as the electrical load transducers. A display is provided for indicating to a driver when the maximum load limit of the components is reached.

The invention is defined in the attached independent claim to which reference should now be made. Further, optional features may be found in the sub-claims appended thereto.

According to a first aspect of the invention there is provided a suspension system comprising: a suspension unit comprising: a chamber arranged to contain a fluid; a piston slidably disposed within the chamber so as to act on the fluid; and a sensor arranged to measure load data relating to the load through the suspension unit; a diagnostics processor which is arranged to receive the load data measured by the sensor of the suspension unit, and diagnose the suspension unit as abnormal if the load data received is determined to be abnormal; and a display arranged to display if the suspension unit is diagnosed as abnormal. The diagnostics processor may diagnose the load data as abnormal in any one of a number of ways. For example, the diagnostics processor may be arranged to diagnose the suspension unit as abnormal if the load data deviates from reference data by more than a pre-determined tolerance. This deviation could be a percentage, a ratio, or an absolute amount, for example. In another embodiment the diagnostics processor may perform a mathematical operation on the load data to determine if it is abnormal.

There may be a plurality of suspension units, each comprising: a chamber arranged to contain a fluid; a piston slidably disposed within the chamber so as to act on the fluid; and a sensor arranged to measure load data relating to the load through the suspension unit; wherein the diagnostics processor is arranged to receive the load data measured by the sensor of each of the suspension units, and diagnose one or more of the plurality of suspension units as abnormal if the load data received for that or those particular suspension unit(s) is determined to be abnormal; and a display arranged to display if any of the suspension units are diagnosed as abnormal. The diagnostics processor may then be able to ascertain if any of the plurality of suspension units is abnormal based on the load data received. The diagnostics processor may identify that there is an abnormal suspension unit, or it may be able to identify which suspension unit or units are abnormal. The diagnostics processor may be arranged to diagnose a particular suspension unit as abnormal if the load data for that suspension unit deviates from reference data by more than a pre-determined tolerance. This deviation could be a percentage, a ratio, or an absolute amount, for example.

The reference data may be pre-stored data. For example, a memory may be provided that is pre-loaded with specific reference data calculated or previously measured. The pre-stored data could be calibration data. The calibration data could be generated by measuring the load data relating to the or each suspension unit under test conditions. These conditions could be an unladen vehicle on a flat surface at ambient conditions, for example.

The reference data could relate to the load data of other suspension units. For example, it may be possible to determine that a particular suspension unit is abnormal if the load data for that suspension unit differs from the load data of other suspension units by more that a predetermined amount.

The suspension unit may comprise a rod for driving the piston, wherein the sensor is arranged to measure data relating to the load acting on the rod. The sensor may comprise a strain gauge bonded to the rod for measuring a strain of the rod. The strain gauge may be a multi-axis strain gauge. The strain gauge may be arranged to measure the lengthwise strain of the rod. The sensor may be arranged to measure data relating to a load reacted by the fluid.

The invention also concerns vehicle, such as a tracked vehicle, comprising a suspension system in accordance with any statement herein.

According to a second aspect of the invention there is provided a method of determining whether a suspension unit is abnormal, comprising the steps: measuring load data relating to a load through the suspension unit; receiving the load data relating to the suspension unit, diagnosing the suspension unit as abnormal if the load data received is determined to be abnormal; and displaying if the suspension unit is diagnosed as abnormal.

The suspension unit may be diagnosed as abnormal if the load data deviates from reference data by more than a pre-determined tolerance.

The method may comprise, for a plurality of suspension units, measuring load data relating to a load through the suspension unit; receiving the load data relating to each of the suspension units; diagnosing one or more of the plurality of suspension units as abnormal if the load data received for that or those particular suspension unit(s) is determined to be abnormal; and displaying if any of the suspension units are diagnosed as abnormal.

A particular suspension unit may be diagnosed as abnormal if the load data for that suspension unit deviates from reference data by more than a pre-determined tolerance.

The reference data may be pre-stored data. The reference data may be calibration data. The reference data may relate to the load data relating to other suspension units.

According to another aspect of the invention, there is provided a suspension unit comprising a chamber arranged to contain a fluid, a piston slidably disposed within the chamber so as to act on the fluid, and a sensor arranged to measure data relating to the load through the suspension unit.

According to a further aspect of the invention there is provided a suspension system comprising a suspension unit in accordance with any statement herein; a processor, which is arranged to receive the data measured by the sensor of the suspension unit, compare the measured data with reference data, and diagnose the suspension unit as abnormal if the measured data exceeds the reference data by a predetermined amount; and a display arranged to display if the suspension unit is diagnosed as abnormal.

According to yet a further aspect of the invention there is provided a method of determining when data measured by the sensor of the suspension unit in accordance with any statement herein exceeds a predetermined amount, comprising the steps: measuring data relating to a load through the suspension unit; comparing the measured data with reference data; and diagnosing the suspension unit as abnormal if the measured data exceeds the reference data by a predetermined amount.

Embodiments of the present invention will now be described, by way of example, with reference to the accompanying drawings, in which:-
Figure 1 schematically shows a perspective view of a suspension unit;
Figure 2 schematically shows a sectional view of the suspension unit of Figure 1;
Figure 3 schematically shows a suspension system; and
Figure 4 graphically illustrates a method of determining abnormal or faulty suspension units.

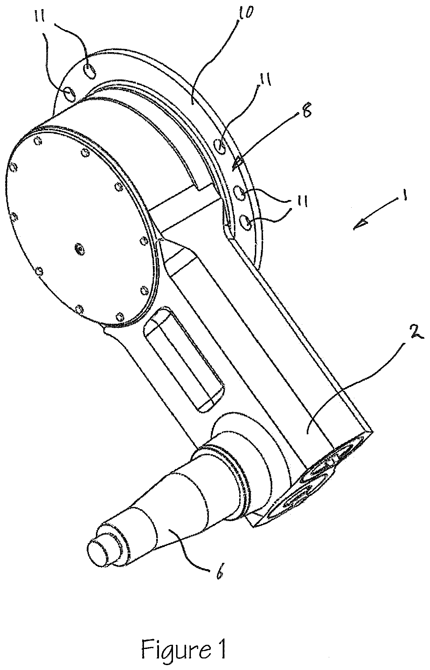

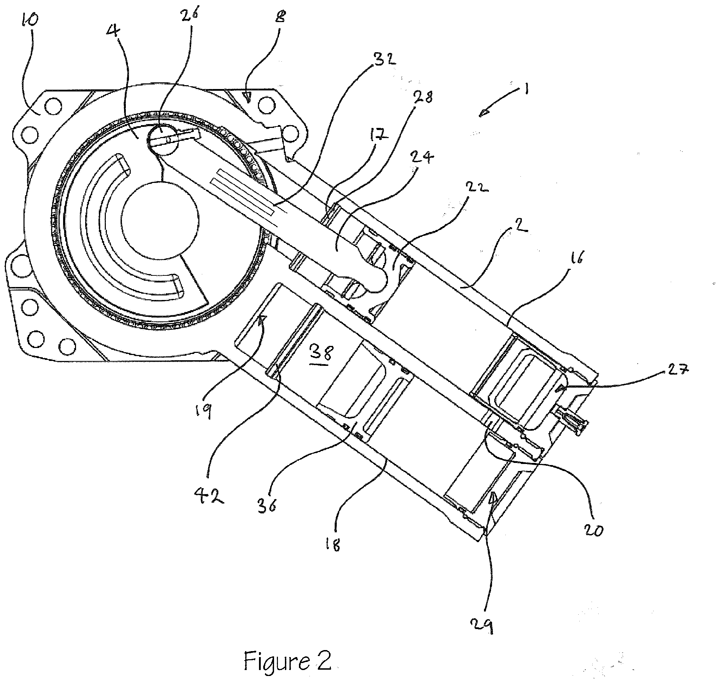

**Figures 1** **and** **2** show a suspension unit 1 comprising a suspension arm 2 which is rotatably connected to a suspension hub 4. At the other end, the suspension arm 2 is provided with a wheel-supporting shaft 6. The suspension hub 4 is provided with a connecting element 8 having a flange 10.

When the suspension unit 1 is mounted on a vehicle, the connecting element 8 is secured to the vehicle hull or chassis (not shown) by means of bolts which pass through countersunk holes 11 in the flange 10 into screw threaded holes in the vehicle hull.

The suspension arm 2, with the suspension hub 4 and all other internal components, is pre-assembled and supplied as a unit.

The suspension arm 2 accommodates a resilient damping arrangement 12. The resilient damping arrangement 12 comprises a chamber 14 defined by first and second cylinders 16, 18 which are substantially parallel to each other. The first and second cylinders 16, 18 are in fluid communication with one another through a fluid passageway 20 provided in a wall separating the cylinders.

A first piston 22 is slidably displaceable within the first cylinder 16 and is attached to one end of a connecting rod 24. The other end of the connecting rod 24 is connected to a crank pin 26 which is carried by the suspension hub 4.

A shoulder 28 is provided towards a first end 17 of the first cylinder 16 to limit the displacement of the first piston 20 within the first cylinder 16 in the direction of the suspension hub 4.

A second piston 36 is slidably disposed in the second cylinder 18. The second piston 36 defines a variable volume 38, defined between the second piston 36 and a first end 19 of the second cylinder 18. The second cylinder 18 to the right of the second piston 36 is in fluid communication with a region towards the second end 27 of the first cylinder 16 through the passageway 20. A shoulder 42 is provided at the first end 19 of the second cylinder 18 to limit displacement of the second piston 36 in the direction of the first end 19 of the second cylinder 18.

The connecting rod 24 is provided with a multi-axis strain gauge 32. The strain gauge 32 is arranged to detect strain corresponding to a strain in the connecting rod 32 in a lengthwise direction. The strain gauge 32 may be modified using known techniques to compensate for temperature variation and bending of the connecting rod 32.

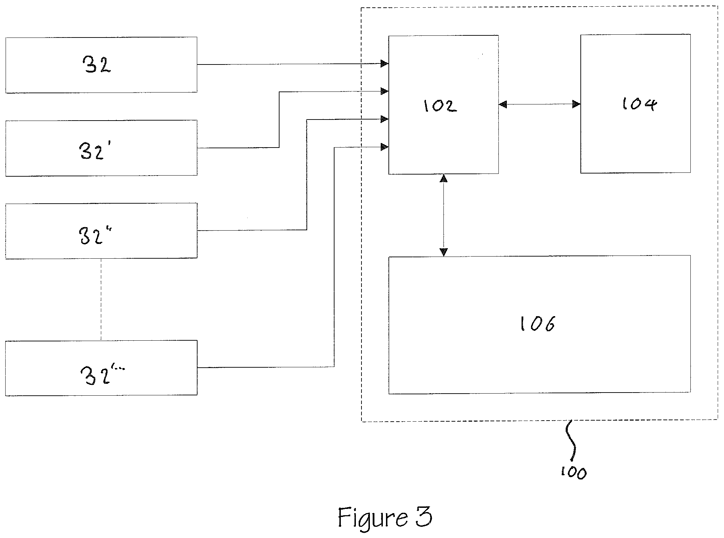

With reference to **Figure 3**, the strain gauge 32 is connected to a vehicle diagnostics module 100 comprising a diagnostics processor 102, a memory 104 and a display 106. The diagnostics processor 102 is in communication with the memory 104 and feeds information to the display 106, which may be an LCD screen for example. The strain gauge 32 is connected to the diagnostics processor 102 via a wired or wireless connection. If the vehicle has a number of suspension units 1 provided with sensors such as strain gauges 32, then each of the strain gauges 32 can be connected to the diagnostics processor 102.

For operation, a primary fluid in the form of oil or other hydraulic fluid fills the first cylinder 16 to the right of the first piston 22, the passageway and the second cylinder 18 to the right of the second piston 36. The volume filled by the oil is collectively referred to as the primary volume. A gas, such as nitrogen, under pressure fills the variable volume 38. The second piston 36 thus acts against the gas in the variable volume 38 to form a pneumatic spring.

In operation, the suspension unit 1 functions as follows.

When fitted to a vehicle, the weight of the vehicle will tend to rotate the arm 2 in the counter clockwise direction about the suspension hub 4. Since the crank pin 26 is eccentrically mounted on the suspension hub 4, this rotation will tend to drive the first piston 22 to the right.

In the static condition (ie when the suspension unit 1 is supporting the weight of the vehicle and the vehicle is static), the first piston 22 is situated approximately midway along the first cylinder 16 and acts on oil (primary fluid) in the primary volume with the weight of the vehicle. The pressure of the gas in the variable volume 38 is equal to the pressure of the oil and therefore the second piston 36 is static. The pressure of the gas is set such that the second piston 36 is approximately midway along the second cylinder 18 in a static condition when under the static weight of the vehicle. The position of the second piston 36 in the static condition is its nominal position.

Should the vehicle, when travelling, encounter an obstacle above the general level of the surface over which the vehicle is travelling, the track guide wheel mounted on the shaft 6 will rise relative to the vehicle. The suspension arm 2 is rotated about the central axis of the suspension hub 4, while the suspension hub 4 remains stationary with respect to the vehicle, the piston 22 moves relative to the first cylinder 16, in a direction towards the passageway 20. Oil is therefore displaced from the first cylinder 16 to the second cylinder 18.

The pressure of the oil during jounce is greater than the pressure of the gas in the variable volume 38 that is separated from the oil by the second piston 36. The increase in pressure of the oil acting on the second piston 36 causes the gas in the variable volume 38 to be compressed and therefore the second piston 36 begins to move away from the nominal position towards the shoulder 42. The variable volume 38 is reduced by the movement of the second piston 36 such that the pressure of the gas in the variable volume 38 is the same as the pressure of the oil.

During rebound, the track guide wheel mounted on the shaft 6 moves away from the static condition in the direction of increasing distance of the track guide wheel from the vehicle hull. In this condition, the first piston 22 moves away from the passageway 20 so that oil is drawn from the second cylinder 18 into the first cylinder 16. The pressure of the oil is less than the pressure of the gas in the variable volume 38. The reduction in pressure of the oil acting on the second piston 36 causes the gas in the variable volume 38 to expand and therefore the second piston 36 begins to move away from the nominal position towards a second end 29 of the second cylinder 18. The variable volume 38 is increased by the movement of the second piston 36 such that the pressure of the gas in the rebound volume 38 is the same as the pressure of the oil.

The vehicles diagnostics module 100 can be used to determine the operational condition of each of the suspension units 1. The strain gauge 32 of each suspension unit 1 measures the amount of strain in the lengthwise direction of the connecting rod 24 of the respective suspension unit 1. The strain measured relates to the load through the suspension unit. This data is fed to the diagnostics processor 102 which calculates the load acting on the connecting rod 24 of each of the suspension units. The measured strain can therefore be used to calculate the load transmitted from the suspension hub 4 through the connecting rod 24, first piston 22, the hydraulic fluid within the primary volume to the second piston 38, and thus the load reacted by the gas spring formed by the second piston 36 and the gas within the variable volume 38.

The calculated load transmitted through the connecting rod 24 of one suspension unit 1 can be compared with calculated load data for the other suspension units 1. The calculated load data can therefore be used to determine the load distribution of the vehicle.

During normal operation, the weight distribution of a vehicle across the suspension units 1 may be approximately equal. For example, if the vehicle is a tracked vehicle having eight wheels, and therefore eight suspension units 1 each having a strain gauge 32, the load distribution may be that shown in Table 1.

**Table 1**

| **Suspension unit** | **Load measured** |
|---|---|
| 1 | 100 |
| 2 | 100 |
| 3 | 100 |
| 4 | 100 |
| 5 | 100 |
| 6 | 100 |
| 7 | 100 |
| 8 | 100 |

If a suspension unit 1 fails, for example hydraulic or pneumatic fluid leaks from the suspension unit 1, the failed suspension unit 1 can no longer support the weight of the vehicle and would ordinarily collapse. However, the large number suspension units 1 on a tracked vehicle means that the remaining suspension units 1 are able to support the weight of the vehicle. The weight of the vehicle may shift onto the remaining suspension units 1. Consequently, the load acting through the faulty suspension unit 1 may be significantly less than that acting on the other suspension units 1. If suspension unit #2 fails, the load distribution may be that shown in Table 2:

**Table 2**

| **Suspension unit** | **Load measured** |
|---|---|
| 1 | 110 |
| 2 | 30 |
| 3 | 110 |
| 4 | 110 |
| 5 | 110 |
| 6 | 110 |
| 7 | 110 |
| 8 | 110 |

In order to determine whether a suspension unit 1 is faulty (or abnormal), the calculated load for the suspension unit 1 can be compared against a reference load data. In one example, this may be the normal load data shown in Table 1 which is stored in the memory 104. By comparing the load data of Table 2 (operating condition) with the load data of Table 1 (normal data) the diagnostics processor 102 can determine that suspension unit #2 is faulty or abnormal. This can be visually displayed on the display 106.

In another example, the reference data may be the average measured load data. For example, the diagnostics processor 102 may calculate the average measured load through the eight suspension units from Table 2 (which would be 100) and compare each of the individual loads measured with this average. If any of the measured loads deviates from the calculated average by more than a pre-determined threshold, such as 20%, that suspension unit may be determined as abnormal. In this example, the diagnostics processor 102 would determine that suspension unit #2 is faulty as the measured load (20) deviates from the average (100) by 80% This result can be displayed to an operator on the display 106. Of course, the pre-determined threshold could be an absolute value for example.

Other methods can be used to diagnose a faulty or abnormal suspension unit 1. For example, the memory 104 may contain reference data that relates to the load transmitted through each suspension unit 1 when all of the suspension units 1 are operating normally. The reference data may be stored on the memory 104 by transferring it from an external source, or may be stored by setting the diagnostics module 100 in a calibration mode.

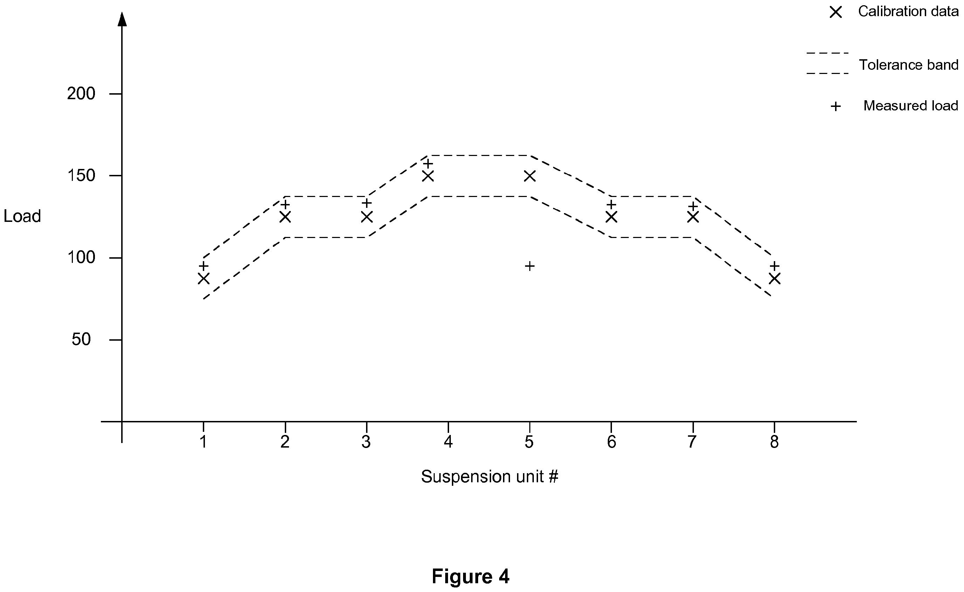

With the diagnostics module 100 in a calibration mode, the vehicle is driven onto a level surface and the strain gauge 32 of each of the suspension units 1 measures the strain in the respective connecting rod 24. The diagnostics processor 102 calculates the load transmitted through each of the suspension units 1 and stores the data as reference data in the memory 104. This data is graphically shown in **Figure 4****.** The diagnostics module 102 may then calculate a tolerance which represents the acceptable load range for each suspension unit. In Figure 4, an allowable tolerance band is represented graphically. The tolerance may be an absolute amount, a relative amount or a percentage, for example.

When the vehicle is later driven onto a level surface, for example after use, a diagnostics mode can be entered into. In this mode, the load transmitted through each of the suspension units 1 can be re-calculated or measured and compared against the calibration reference load data or allowable tolerance stored in the memory 104. If the calculated load data for a particular suspension unit 1 exceeds the reference data for that unit by a predetermined amount, and does therefore not fall within the tolerance band, then that suspension unit 1 can be diagnosed as faulty (or abnormal). Figure 4 shows the measured loads represented graphically in which it can be seen that the load through suspension unit #5 does not fall within the tolerance band and the load data for that suspension unit is abnormal. The diagnostics processor 102 can therefore diagnose suspension unit #5 as abnormal and therefore faulty. This diagnosis can be displayed to an operator on the display 106.

Faulty suspension units 1 may be suspension units from which the hydraulic or pneumatic fluid has leaked. This is because they would be less able to support the vehicles weight, and therefore the load transmitted through the particular suspension unit 1 would deviate from the stored reference load data.

Although the described embodiment refers to calculation of a load acting on a suspension unit based on a measured strain, it will be appreciated that other parameters which relate to the load acting through the suspension unit could be used. Furthermore, although the described embodiment uses the measured strain to calculate a load, it will be appreciated that calculation of the load may not be required. The measured data may be compared directly or indirectly with stored data.

Suspension units 1 can be diagnosed as being faulty without close inspection or disassembly of the units 1 and replaced or repaired accordingly.

The calculated load can be combined with outputs from additional sensors to provide a diagnostic of the suspension unit 1.

For example, the suspension unit 1 could be provided with means for determining displacement of the connecting rod 24 for a measured load. The stiffness of the gas spring formed by the second piston 36 acting on the gas in the variable volume 38 could then be calculated. The calculated stiffness may then be compared against a reference value which corresponds to a correctly functioning suspension unit 1. A loss of pneumatic fluid can be detected as a change in stiffness of the pneumatic spring.

Although it has been described that the suspension unit is an in-arm suspension unit, the suspension unit may be any other type of suspension unit which comprises a load bearing hydraulic or pneumatic component actuated by a piston arrangement.

## Claims

1. A suspension system comprising:
a plurality of suspension units (1), each comprising:
a chamber (14) arranged to contain a fluid;
a piston (22) slidably disposed within the chamber (14) so as to act on the fluid; and
a sensor (32) arranged to measure load data relating to the load through the suspension unit (1);
**characterized by** a diagnostics processor (102) which is arranged to receive the load data measured by the sensor of each of the suspension units (1), and diagnose one or more of the plurality of suspension units (1) as abnormal if the load data received for that or those particular suspension unit(s) (1) is determined to be abnormal; and
a display (106) arranged to display if any of the suspension units (1) are diagnosed as abnormal; **characterized in that** the diagnostics processor (102) is arranged to diagnose a particular suspension unit (1) as abnormal if the load data for that suspension unit (1) deviates from reference data by more than a pre-determined tolerance; and wherein the reference data relates to the load data of other suspension units (1).

2. A suspension system according to claim 1, wherein the reference data is pre-stored data

3. A suspension system according to claim 2, wherein the pre-stored data is calibration data.

4. A suspension system according to any preceding claim, wherein each suspension unit (1) comprises a rod (24) for driving the piston (22), and wherein the sensor (32) is arranged to measure data relating to the load acting on the rod (24).

5. A suspension system according to claim 4, wherein the sensor (32) comprises a strain gauge bonded to the rod (24) for measuring a strain of the rod.

6. A suspension system according to claim 5, wherein the strain gauge (32) is a multi-axis strain gauge.

7. A suspension system according to claim 5 or 6, wherein the strain gauge (32) measures the lengthwise strain of the rod (24).

8. A suspension system according to any preceding claim, wherein the sensor (32) is arranged to measure data relating to a load reacted by the fluid.

9. A vehicle comprising a suspension system in accordance with any preceding claim.

10. A method of determining whether a suspension unit (1) is abnormal, comprising the steps:
for a plurality of suspension units (1), measuring load data relating to a load through the suspension unit (1);
receiving the load data relating to each of the suspension units (1);
**characterized by** diagnosing one or more of the plurality of suspension units (1) as abnormal if the load data received for that or those particular suspension unit(s) (1) is determined to be abnormal; and
displaying if any of the suspension units (1) are diagnosed as abnormal; **characterized in that** a particular suspension unit (1) is diagnosed as abnormal if the load data for that suspension unit (1) deviates from reference data by more than a pre-determined tolerance; and
wherein the reference data relates to the load data relating to other suspension units (1).

11. A method according to claim 10, wherein the reference data is pre-stored data.

12. A method according to claim 11, wherein the reference data is calibration data.

## Patentansprüche

1. Aufhängungssystem, umfassend:
eine Vielzahl von Federbeinen (1), die jeweils umfassen:
eine für die Aufnahme von Fluid ausgelegte Kammer (14);
einen Kolben (22), der in der Kammer (14) verschiebbar angeordnet ist, um auf das Fluid einzuwirken; und
einen Sensor (32), der für das Messen der auf das Federbein (1) einwirkenden Belastungsdaten ausgelegt ist;
**gekennzeichnet durch** einen Diagnoseprozessor (102), der dafür ausgelegt ist, die vom Sensor an jedem Federbein (1) gemessenen Belastungsdaten zu empfangen und ein oder mehrere Federbeine (1) als anormal zu diagnostizieren, wenn die für ein oder mehrere bestimmte Federbeine (1) vorliegenden Belastungsdaten als anomal befunden werden; und
eine Anzeige (106), die dafür ausgelegt ist anzuzeigen, wenn ein Federbein (1) als anormal diagnostiziert wird;
**dadurch** gekennzeichnet,
dass der Diagnoseprozessor (102) dafür ausgelegt ist, ein bestimmtes Federbein (1) als anomal zu diagnostizieren, wenn die Belastungsdaten für dieses Federbein (1) um mehr als eine vorbestimmte Toleranz von den Referenzdaten abweichen; und wobei sich die Referenzdaten auf die Belastungsdaten anderer Federbeine (1) beziehen.

2. Aufhängungssystem gemäß Anspruch 1, wobei es sich bei den Referenzdaten um vorab gespeicherte Daten handelt.

3. Aufhängungssystem gemäß Anspruch 2, wobei es sich bei den im voraus gespeicherten Daten um Kalibrierungsdaten handelt.

4. Aufhängungssystem gemäß einem der vorhergehenden Ansprüche, wobei jedes Federbein (1) eine Stange (24) zum Antreiben des Kolbens (22) umfasst und wobei der Sensor (32) für die Messung der Lastdaten ausgelegt ist, die auf die Stange (24) wirken.

5. Aufhängungssystem gemäß Anspruch 4, wobei der Sensor (32) einen mit der Stange (24) verbundenen Dehnungsmesser aufweist, um die Dehnung der Stange zu messen.

6. Aufhängungssystem gemäß Anspruch 5, wobei es sich bei dem Dehnungsmesser (32) um einen mehrachsigen Dehnungsmesser handelt.

7. Aufhängungssystem gemäß Anspruch 5 oder 6, wobei der Dehnungsmesser (32) die Längsdehnung der Stange (24) misst.

8. Aufhängungssystem gemäß einem der vorhergehenden Ansprüche, wobei der Sensor (32) für die Messung der Lastdaten ausgelegt ist, die durch das Fluid entgegenwirken.

9. Fahrzeug mit einem Aufhängungssystem gemäß einem der vorhergehenden Ansprüche.

10. Verfahren zum Bestimmen, ob ein Federbein (1) anormal ist, umfassend die Schritte:
Belastungsdaten für eine Vielzahl von Federbeinen (1) messen, die sich auf die auf die Federbeine (1) wirkenden Kräfte beziehen;
Belastungsdaten empfangen, die sich auf jedes Federbein (1) beziehen;
durch die Diagnose von einem oder mehreren Federbeinen (1) als anormal gekennzeichnet ist, wenn die für ein oder mehrere bestimmte Federbeine (1) vorliegenden Belastungsdaten als anomal befunden werden; und
anzeigen, wenn ein Federbein (1) als anormal diagnostiziert wird;
**dadurch gekennzeichnet ist, dass** ein bestimmtes Federbein (1) als anomal diagnostiziert wird, wenn die Belastungsdaten für dieses Federbein (1) um mehr als eine vorbestimmte Toleranz von den Referenzdaten abweichen; und
wobei sich die Referenzdaten auf die Belastungsdaten anderer Federbeine (1) beziehen.

11. Verfahren gemäß Anspruch 10, wobei es sich bei den Referenzdaten um vorab gespeicherte Daten handelt.

12. Verfahren gemäß Anspruch 11, wobei es sich bei den Referenzdaten um Kalibrierungsdaten handelt.

## Revendications

1. Un système de suspension comprenant :
une pluralité d'unités de suspension (1) comprenant chacune :
une chambre (14) agencé pour contenir un fluide ;
un piston (22) disposé de manière coulissante dans la chambre (14) de manière à agir sur le fluide ; et
un capteur (32) agencé pour mesurer les données de charge relatives à la charge à travers l'unité de suspension (1) ;
**caractérisé par** un processeur de diagnostic (102) qui est agencé pour recevoir les données de charge mesurées par le capteur de chacune des unités de suspension (1), et qui diagnostique une ou plusieurs unités parmi la pluralité d'unités de suspension (1) comme anormales si les données de charge reçues pour cette ou ces unité(s) de suspension (1) particulières sont considérées comme anormales ; et
un affichage (106) agencé pour afficher si l'une quelconque des unités de suspension (1) est diagnostiquée comme anormale ;
**caractérisé en ce que**
le processeur de diagnostic (102) est agencé pour diagnostiquer une unité de suspension particulière (1) comme anormale si les données de charge pour cette unité de suspension (1) s'écartent des données de référence de plus d'une tolérance prédéterminée ; et dans lequel les données de référence concernent les données de charge d'autres unités de suspension (1).

2. Un système de suspension selon la revendication 1, dans lequel les données de référence sont des données pré-stockées.

3. Un système de suspension selon la revendication 2, dans lequel les données pré-stockées sont des données d'étalonnage.

4. Un système de suspension selon l'une quelconque des revendications précédentes, dans lequel chaque unité de suspension (1) comprend une tige (24) pour entraîner le piston (22), et dans lequel le capteur (32) est agencé pour mesurer des données relatives à la charge agissant sur la tige (24).

5. Un système de suspension selon la revendication 4, dans lequel le capteur (32) comprend une jauge extensométrique liée à la tige (24) pour mesurer une déformation de la tige.

6. Un système de suspension selon la revendication 5, dans lequel la jauge extensométrique (32) est une jauge multi-axiale.

7. Un système de suspension selon la revendication 5 ou 6, dans lequel la jauge extensométrique (32) mesure la déformation longitudinale de la tige (24).

8. Un système de suspension selon l'une quelconque des revendications précédentes, dans lequel le capteur (32) est agencé pour mesurer des données relatives à la charge ayant réagi avec le fluide.

9. Un véhicule comprenant un système de suspension selon l'une quelconque des revendications précédentes.

10. Un procédé pour déterminer si une unité de suspension (1) est anormale, il comprend les étapes suivantes :
pour une pluralité d'unités de suspension (1), la mesure des données de charge relatives à une charge à travers l'unité de suspension (1) ;
la réception des données de charge relatives à chacune des unités de suspension (1) ;
**caractérisé par** le diagnostic d'une ou de plusieurs des unités de suspension (1) comme étant anormales si les données de charge reçues pour cette ou ces unités de suspension particulières (1) sont déterminées comme étant anormales ; et
démontrant si l'une des unités de suspension (1) est diagnostiquée comme anormale ;
**caractérisé en ce**
**qu'**une unité de suspension particulière (1) est diagnostiquée comme anormale si les données de charge pour cette unité de suspension (1) s'écartent des données de référence de plus d'une tolérance prédéterminée ; et
dans lequel les données de référence concernent les données de charge relatives à d'autres unités de suspension (1).

11. Un procédé selon la revendication 10, dans lequel les données de référence sont des données pré-stockées.

12. Un procédé selon la revendication 11, dans lequel les données de référence sont des données d'étalonnage.
